# DEMANDE DE BREVET EUROPEEN

(11) **EP 2 079 147 A1**
(43) Date de publication de la demande: **15.07.2009**
(21) Numéro de dépôt: 09150315.1
(22) Date de dépôt: 09.01.2009
(51) Int. Cl.: H02J 7/14, B60R 16/02

(54) **Circuit électrique**

(30) Priorité: 09.01.2008 FR 0850100
(71) Demandeur: Peugeot Citroën Automobiles SA, 78140 Vélizy-Villacoublay (FR)
(72) Inventeur: Rolland, Guillaume, 78380 Bougival (FR); Queroy, Frédéric, 91170 Viry Chatillon (FR)
(74) Mandataire: Ménès, Catherine

(57) **Abrégé**

L'invention concerne un circuit électrique, plus particulièrement destiné aux véhicules automobiles, comportant
-un réseau de bord (R) à un potentiel Ur, alimentant des organes consommateurs, dont les branches électriques sont reliées à un potentiel de masse,
- un moyen générateur d'énergie électrique (A),
- un moyen de stockage électrique (S1) apte à fournir une tension variable monté sur une première branche B1,
- une batterie (S2) apte à fournir une tension constante montée sur une deuxième branche (B2, B12) du réseau de bord, et

**caractérisé en ce que** ledit moyen de stockage électrique (S1) apte à fournir une tension variable est connecté au moyen générateur d'énergie électrique (A) via un premier commutateur (C1).

## Description

### Domaine technique

La présente invention concerne les circuits électriques, notamment les circuits de véhicules automobiles, comportant une pluralité des éléments de stockage électrique, notamment des éléments de stockage d'énergie du type batteries ou du type supercondensateurs - ces derniers étant également connus sous le terme de super- ou ultra-capacités ou encore UCAP- destinés tout particulièrement aux applications de forte puissance.

Ces applications sont par exemple dans le domaine des transports (véhicules hybrides, tramways, bus, etc.), de l'alimentation électrique (éoliennes) ou encore plus généralement dans des domaines où des pointes de consommation électriques peuvent nécessiter de supplémenter l'énergie fournie par une batterie ou un réseau. La présente invention concerne plus particulièrement la charge et la décharge de tels éléments.

### Etat de la technique antérieure

On constate une très probable généralisation des d'alterno-démarreurs sur les véhicules automobiles. Cette solution technologique consiste en une machine électrique capable de jouer le rôle d'un démarreur, et donc d'entrainer le moteur thermique en utilisant une source électrique comme, par exemple une batterie ou, en dehors des phases de démarrage, de générer un courant électrique. La puissance de telles machines électriques est de plus en plus importante, et permet d'entrainer le véhicule sur de plus longues durées et plus souvent. Cette configuration se rencontre notamment sur les véhicules dits « hybrides », pour lesquels la machine électrique prend le relais sur une durée courte pour augmenter la puissance du moteur thermique à bas régime ou sur une durée plus longue en apportant une assistance électrique. Elle se rencontre également sur des véhicules du type « Stop and Start » pour lesquels le moteur thermique s'arrête dès que le véhicule est à basse vitesse ou à l'arrêt et redémarre, par exemple, sur volonté conducteur.

Avec de telles machines électriques de fortes puissances, une simple batterie conventionnelle est souvent insuffisante pour fournir et stocker l'énergie électrique nécessaire. C'est pourquoi il a été proposé de prévoir une source de stockage d'énergie complémentaire, et plus spécialement une source de stockage basée sur des supercondensateurs.

La technologie de stockage d'énergie par des supercondensateurs repose sur le principe de fonctionnement des condensateurs classiques, et offre ainsi des performances en densités d'énergie relativement faibles mais avec des capacités en puissance fortes. Ces supercondensateurs s'apparent ainsi fonctionnellement aux batteries électrochimiques qui équipent notamment les véhicules automobiles. Les supercondensateurs supportent un nombre de cycles de charge et de décharge très supérieur à celui des batteries conventionnelles, les spécialisant dans les applications requérant des sources de puissance élevée sur des temps courts. La spécificité d'une supercapacité est d'être un système d'accumulation de charges électriques, avec comme pour tout condensateur, la quantité de charge électrostatique Q reliée à la tension U par l'équation Q = CU²/2.

Du fait d'une technologie de construction par enroulement de films minces, la tension unitaire maximum d'une UCAP est aujourd'hui limitée à environ 2,7 Volts.

Pour tirer profit des avantages de ce type d'éléments de stockage, il est connu des architectures générales avec un circuit consommateur, pouvant être un réseau de bord, à un potentiel Ur, une machine électrique connectée en parallèle avec un groupe de supercondensateurs, cet ensemble formant un réseau dit flottant à une tension supérieure à la tension de la batterie. La batterie est connectée au réseau de bord régulé et le réseau flottant et le réseau régulé sont connectés par l'intermédiaire d'un convertisseur DC/DC permettant de fournir une tension régulée à l'ensemble batterie plus réseau de bord. Certaines architectures ont un convertisseur DC/DC réversible permettant d'élever la tension du réseau régulé vers le réseau flottant. Ce type d'architecture est couteuse et peu flexible car la puissance et le type de convertisseur DC/DC doivent être adaptées en fonction des types de consommateurs sur les deux réseaux.

Par ailleurs, il est connu du brevet FR2853154 un système d'alimentation en énergie électrique d'organe consommateurs embarqués à bord d'un véhicule automobile comportant des moyens formant générateur d'énergie électrique dont la sortie est raccordée par un réseau électrique à des premiers moyens de stockage d'énergie électrique - tels par exemple une batterie électrochimique - et à un premier organe consommateur. Un second organe consommateur est raccordé au réseau électrique à travers des moyens formant source d'énergie auxiliaire, tels que par exemple un condensateur, et des moyens de commutation dont le fonctionnement est piloté par des moyens de commande pour permettre une charge des seconds moyens de stockage à partir du reste du système et un raccordement de ceux-ci en série avec le second organe consommateur pour assurer son alimentation lors de son activation. Un tel dispositif permet d'augmenter la tension aux bornes du second consommateur lors de son activation, et donc permet d'atténuer les chutes de tension associées à la mise en route d'organes gros consommateurs d'énergie, sans pour autant sur-dimensionner les moyens de génération et de stockage de l'énergie. Ce dispositif ne permet pas d'augmenter la tension disponible pour la machine électrique et n'est pas prévu pour réguler une tension avec ou sans batterie.

II est connu du brevet DE 103 05939, une architecture de réseau de bord d'un véhicule comportant une branche portant un condensateur et une branche parallèle avec une batterie, la branche condensateur pouvant être isolée du réseau par un premier condensateur. De plus, des moyens sont prévus pour isoler une première partie du réseau de bord,

### Brève description de l'invention

La présente invention a ainsi pour but une architecture de réseau permettant de fonctionner à différents niveaux de tension sans convertisseurs de tension DC/DC.

Selon l'invention ce but est atteint par un circuit électrique comportant un moyen générateur d'énergie électrique, un réseau de bord à un potentiel Ur, alimentant des organes consommateurs, les branches électriques du réseau de bord étant reliées à un potentiel de masse ; un moyen de stockage électrique apte à fournir une tension variable monté sur une première branche et une batterie apte à fournir une tension constante montée sur une deuxième branche du réseau de bord. Le moyen de stockage électrique apte à fournir une tension variable est connecté au moyen générateur d'énergie électrique via un premier commutateur.

Selon l'invention, le moyen de stockage électrique apte à fournir une tension variable est monté sur une branche en série de la branche batterie, la batterie étant de plus également directement reliée au réseau de bord par une troisième branche. Cette troisième branche peut porter un deuxième commutateur. Alternativement, le commutateur peut être placé sur le réseau de bord, entre les première et troisième branches.

L'architecture proposée selon l'invention permet d'utiliser l'énergie électrique que peut fournir le groupe de supercondensateurs et/ou la batterie sans avoir à convertir la tension, éventuellement très élevée, que peut fournir ce groupe de condensateurs ou supercondensateurs, donc en se passant d'un convertisseur DC/DC.

Par moyen de stockage électrique apte à fournir une tension variable, on entend au sens de l'invention un moyen capable de fournir différents niveaux de tension dans un fonctionnement nominal, comme par exemple un condensateur. Une batterie électrochimique est par contre considérée comme un moyen de fourniture d'une tension fixe, même si de manière transitoire, le réseau de bord raccordé à la batterie peut fluctuer lors des fortes demandes de courant.

Par machine électrique il est tout particulièrement entendu un alterno-démarreur, notamment un alterno-démarreur conçu pour redémarrer fréquemment un moteur thermique équipant un véhicule muni d'un système dit stop-and-start, qui provoque l'arrêt du moteur dès que le véhicule est à faible vitesse ou à l'arrêt, par exemple pour respecter un feu d'intersection, et le redémarrage du moteur en réponse à une demande conducteur, comme un simple pression sur la pédale d'accélérateur, ou une demande système. Cet alterno-démarreur peut également être conçu pour entrainer le véhicule pendant des périodes courtes ou prolongées comme dans le cas des véhicules hybrides. Pour de telles applications, la machine électrique peut typiquement être conçue pour opérer sous une tension comprise entre la tension 12,5V et typiquement 200V. Des fonctionnements à tension plus élevées sont envisageables.

Le moyen de stockage électrique apte à fournir une tension variable peut être avantageusement formé par un groupe de condensateurs ou supercondensateurs montés en série et/ou en parallèle.

La batterie est par exemple une batterie électrochimique ou plus généralement tout moyen approprié pour fournir une tension constante pendant une période relativement longue, en particulier une batterie électrochimique conventionnelle dite 12V d'un véhicule. Bien entendu, la batterie peut également être plus puissante, ou fonctionner à tension plus élevée, comme par exemple du type, 45V-110V ou plus, même s'il faut souligner que l'invention permet avantageusement de ne pas sur-dimensionner les batteries, tout en étant capable de fournir l'énergie requise par une machine électrique qui doit être alimentée avec une tension bien supérieure à la tension fournie par la batterie, par exemple comprise entre 12,5 et 45V.

Dans une variante de l'invention, la branche du réseau de bord sur laquelle est montée la batterie, autrement dit la branche batterie, est pourvue d'un deuxième commutateur qui permet d'isoler la batterie du réseau, notamment lorsque le réseau est alimenté par le moyen de stockage électrique apte à fournir une tension variable

Dans toutes les variantes de l'invention, il peut être prévu un limitateur de tension pour éviter des tensions trop élevées si les consommateurs du réseau de bord ne sont pas adaptés à des tensions supérieures à la tension normale fournie par la batterie. Par ailleurs, on peut également prévoir des moyens pour contrôler la tension aux bornes du moyen apte à fournir une tension variable.

Le circuit électrique selon l'invention est tout particulièrement destiné à l'équipement de véhicules automobiles, la machine électrique étant alors typiquement un alternateur, en particulier de véhicules équipés d'une fonction de type stop-and-start, la machine électrique étant alors par exemple un alterno-démarreur ;

### Brève description des figures

D'autres avantages et particularités de l'invention ressortent de la description de modes de réalisation faite ci-après en référence aux dessins annexés dans lesquels :

La figure 1 est un schéma d'architecture type parallèle simple, connu de l'art;

La figure 2 est un schéma d'architecture type parallèle simple, avec de plus un interrupteur d'isolement, également connu de l'art

Les figures 3 et 4 illustrent une architecture selon l'invention, de types série où les éléments de stockages additionnels sont commutables en série avec la batterie. Lorsqu'ils sont commutés la figure 3 illustre une solution où le réseau de bord est connecté à la batterie. La figure 4 illustre une solution où le réseau de bord est connecté à l'ensemble UCAP plus batterie.

### Exposé détaillé de modes de réalisation de l'invention

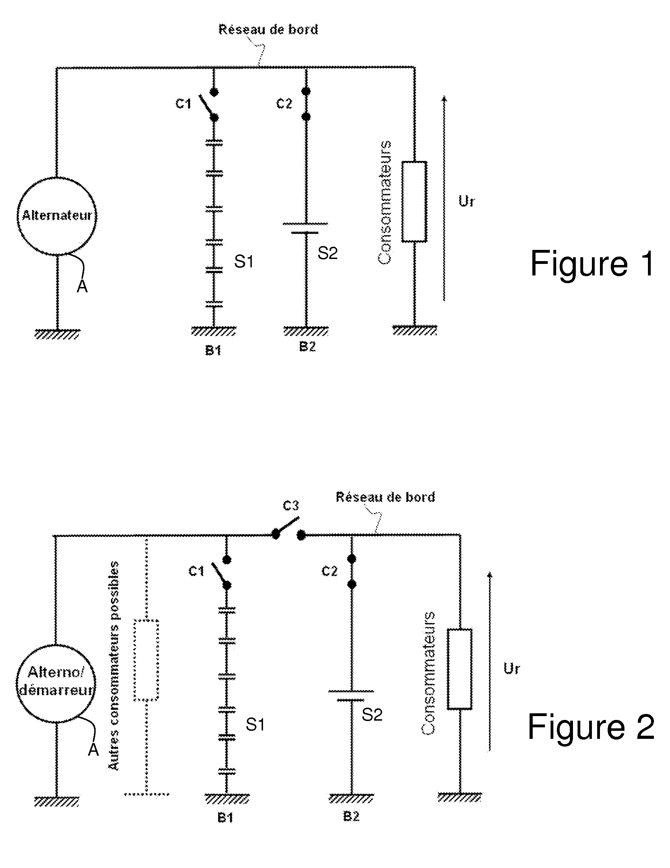

Les figures 1 et 2 illustrent des états de l'art antérieur.

La figure 1 est un schéma illustrant une variante simple avec un circuit électrique constituant un réseau de bord à un potentiel Ur, de préférence régulé. Le réseau de bord alimente nombre d'organes consommateurs électriques nécessaires pour assurer des fonctions permettant le fonctionnement de tout ou partie des consommateurs du véhicule. Il va de soi que ces équipements ne sont normalement pas tous activés simultanément, mais que par ailleurs, il n'est pas souhaitable que l'activation de l'un entraine la désactivation, ou une moindre qualité de fonctionnement d'un autre.

L'énergie électrique est essentiellement fournie par des stockeurs d'énergie électrique, montés sur deux branches parallèles B1 et B2, le stockeur d'énergie S1 associé à la première branche B1 étant apte à fournir une tension U_{S1} différente de la tension U_{S2} susceptible d'être fournie par le stockeur d'énergie S2 de la branche B2. La branche B1, peut être isolée du réseau de bord au moyen du commutateur piloté C1. La branche B2 peut être isolée du réseau de bord au moyen du commutateur piloté C2. Pour plus de clarté, on n'a pas fait figurer sur cette figure les moyens de commande des commutateurs pilotés C1 et C2, ni par la suite des autres commutateurs ou interrupteurs pilotés, moyens de commande qui peuvent, par exemple, être constitués par une unité centrale déterminant à un instant donné la position souhaitée pour chaque commutateur ou interrupteur et des moyens de transmission des ordres de commutation, de type ligne filaire ou une ligne sans fil, la commande pouvant alors être opérée par des ondes électromagnétiques comme par exemple des signaux radio ou lumineux.

Dans le cas ici illustré, le stockeur d'énergie S1 de la première branche B1 comporte six condensateurs montés en série. Ces condensateurs sont de préférence des supercondensateurs. Ces derniers sont également connus sous le terme de super- ou ultra-capacités ou encore Ucap.

Les Ucap destinées aux applications de forte puissance, qui conviennent donc pour des applications automobiles, sont capables d'être individuellement chargées à une tension maximale d'environ 2,7 Volts. En mettant par exemple en série 6 Ucap chargées, on peut donc fournir une tension U_{S1} d'environ 16 Volts. Bien entendu, cette tension U_{S1} dépend de l'état de charge des supercondensateurs, le stockeur d'énergie S1 est donc au sens de l'invention un moyen de stockage électrique apte à fournir une tension variable.

La seconde branche B2, en parallèle de la branche B1, comporte une batterie électrochimique conventionnelle S2, capable de fournir une tension constante typiquement comprise entre 12 et 13 Volts.

Le circuit proposé comporte par ailleurs une machine électrique, A, telle par exemple un alternateur ou un alterno-démarreur. Dans le cas d'une solution avec un alterno-démarreur, la machine électrique constitue d'une part le générateur d'énergie électrique stockée dans les Ucap et/ou la batterie, et d'autre part un consommateur, notamment lorsque la machine électrique est utilisée pour entrainer le moteur thermique, lors des phases de démarrage notamment, ou plus longtemps si la machine est conçue pour opérer sur des durées relativement longues.

Sur cette figure 1, on note de plus que toutes les branches sont reliées à un potentiel de masse.

Avec une telle architecture, il est possible de stocker au niveau du groupe d'Ucap une tension supérieure à celle de la batterie, mais néanmoins du même ordre de grandeur (dans le cas présent, de l'ordre 16 Volts pour une batterie de l'ordre de 12-13 Volts), pour ne pas perturber les consommateurs imposant une tension régulée, à la tension de la batterie.

La recharge des Ucap se fait en fermant le commutateur C1. Quand la recharge correspond à la tension souhaitée, le commutateur C1 est à nouveau ouvert.

Au démarrage du véhicule, la machine électrique peut alors être alimentée sous une tension comprise entre la tension de la batterie et la tension de recharge des Ucap. Les Ucap vont alors progressivement se décharger, et le commutateur C1 va s'ouvrir lorsque la tension du pack d'Ucap devient inférieure à la tension de la batterie.

II doit être souligné que le cas où le démarrage se fait simplement avec le pack Ucap, l'ampérage dans la première branche est très important dans cette architecture, le commutateur C1 doit donc être en mesure de supporter des courants de l'ordre de 800 à 1000 Ampères comme il peut être nécessaire pour une application automobile.

L'architecture proposée à la figure 1 peut rendre nécessaire la présence d'un limiteur de tension pour éviter des tensions trop élevées si les consommateurs du réseau de bord ne sont pas adaptés à des tensions supérieures à la tension normale fournie par la batterie.

L'architecture présentée à la figure 2 diffère de celle de la figure 1 essentiellement par la présence d'un interrupteur C3, placé sur le réseau de bord, entre les points de jonction des branches B1 et B2. Cet interrupteur piloté C3 permet d'isoler du reste du réseau de bord l'ensemble formé par la machine électrique, en l'occurrence un alterno-démarreur A, et le moyen de stockage électrique S1 apte à fournir une tension variable, dans le cas ici représenté à nouveau un pack d'UCAP. Cette solution permet d'alimenter les Ucap avec une tension supérieure à la tension maximale du réseau. Avec une telle architecture, l'ensemble isolé du réseau de bord par l'interrupteur C3 constitue un réseau flottant, porté au potentiel variable de l'unité de stockage S1 de la branche B1 ou de l'alternateur A. Cette architecture permet de supprimer la chute de tension lors des démarrages, le réseau de bord restant alimenté par la batterie. A noter que des consommateurs auxiliaires - illustrés par une branche en traits interrompus - peuvent être placés sur la partie flottante du réseau de bord, à la condition qu'ils soient aptes à fonctionner avec une tension variable. Il peut s'agir par exemple d'un démarreur - qui peut être utilisé pour les démarrages et les redémarrages si la machine électrique est constituée par un simple alternateur ou simplement lors des démarrages si la machine électrique est constituée par un alterno-démarreur utilisé en mode « démarreur » uniquement pour les redémarrages.

L'architecture de la figure 2 conserve ainsi les avantages de l'architecture de la figure 1, avec la possibilité d'augmenter la puissance de l'alterno-démarreur au démarrage en mettant en parallèle la batterie et les Ucap.

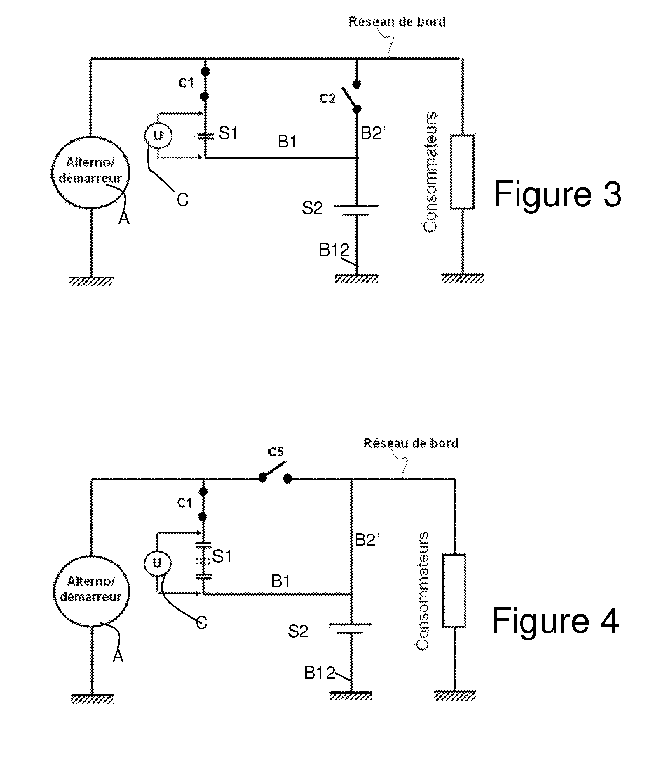

Les figures 3 et 4 présentent une architecture selon l'invention avec les deux stockeurs d'énergie S1 et S2 en série. Cette architecture permet de s'assurer que les supercapacités sont effectivement utilisées alors que dans la configuration précédente, en parallèle, une partie du pack UCAP ne sert qu'à amener la tension au niveau du réseau de bord.

Dans la description ci-après, on n'a pas repris les éléments déjà discuté en relation avec les architectures proposées aux figures 1 et 2, décrivant des montages en parallèles. Dans ces deux figures 3 et 4, l'élément de stockage S1 est porté par la branche B1 qui se prolonge par une branche B12 portant la batterie.

L'élément de stockage S1 sur la branche B1, représenté ici par des Ucap, peut ou non être activé à l'aide du commutateur C1. Lorsque C1 est en position fermé, la tension aux bornes du réseau est égale à la tension de la batterie augmentée de la tension aux bornes des Ucap.

La batterie S2 est par ailleurs également reliée au réseau de bord par une branche B2' sur laquelle est montée un commutateur C2. Ainsi, lorsque le commutateur C1 est ouvert, le réseau de bord peut être alimenté par la batterie. A noter que lorsque le commutateur C1 est en position fermée, le commutateur C2 doit être ouvert pour ne pas créer un court-circuit aux bornes des Ucap constituant l'élément de stockage S1.

L'architecture présentée à la figure 4 est similaire à celle de la figure 3 mais comporte maintenant un commutateur C5 entre la branche B1 et la branche B2' Dans cette configuration, le commutateur C5 permet d'isoler une partie du réseau de bord, qui lorsque le commutateur C1 est ouvert est alors uniquement alimentée par la batterie S2. Pour éviter des courts-circuits, quand C1 est fermé, C5 doit être ouvert. Pour recharger la batterie et le pack d'UCAP, on sera donc dans une configuration C1 fermé, C5 ouvert, correspondant également à la configuration pour un démarrage avec augmentation de la puissance électrique apporté par les Ucap, tout en maintenant l'alimentation générale du réseau de bord pour les autres consommateurs par la batterie. Pour recharger seulement la batterie - ou alimenter le réseau de bord avec la seule batterie S2, on sera alors dans la configuration C5 fermé, C1 ouvert.

Dans les architectures présentées aux figures 3 et 4, il est nécessaire de s'assurer que les Ucap ont toujours une charge minimum lorsque l'alterno-démarreur fonctionne en mode démarreur. Pour cela, on peut avantageusement prévoir des moyens de détermination de la tension aux bornes des Ucap (soit directement comme ici représenté par les moyens C soit via des moyens de calcul à partir de la connaissance des tensions réseau de bord et batterie).

II faut bien souligner que toutes les architectures proposées permettent bien d'opérer avec des moyens de stockage d'énergie capables de fournir des tensions différentes ceci sans que le circuit ne comporte de convertisseur DC/DC.

Pour les applications automobiles, ces différentes architectures vont ainsi permettre de fonctionner selon trois modes principaux :
- Un mode de démarrage, selon lequel la machine électrique est active en mode moteur. Selon les différentes architectures, la source d'énergie additionnelle (le moyen de stockage électrique apte à fournir une tension variable) est soit seule soit en série ou en parallèle avec la batterie.
- Un mode recharge, récupération, essentiellement identique au mode précédent si ce n'est que la machine électrique est active en mode alternateur et génère donc de l'énergie stockée par le groupe de supercondensateurs et/ou la batterie.
- Un mode de délestage, où la machine électrique est inactive de sorte que les moyens stockeurs d'énergie (batterie et groupe de supercondensateurs) alimentent le réseau de bord.

## Revendications

1. Circuit électrique comportant
- un réseau de bord (R) à un potentiel Ur, alimentant des organes consommateurs, dont les branches électriques sont reliées à un potentiel de masse,
- un moyen générateur d'énergie électrique (A),
- un moyen de stockage électrique (S1) apte à fournir une tension variable monté sur une première branche B1, connecté au moyen générateur d'énergie électrique (A) via un premier commutateur (C1).
- une batterie (S2) apte à fournir une tension constante montée sur une deuxième branche (B12) du réseau de bord, et
**caractérisé en ce que** ledit moyen de stockage électrique (S1) apte à fournir une tension variable est monté sur une branche (B1) en série de la batterie (B12), sans interposer de convertisseur DC/DC, la batterie étant de plus connectée au réseau de bord par une troisième branche (B2'), un deuxième commutateur (C2 ; C5) permettant d'isoler la troisième branche (B'2) ou la partie du réseau de bord comportant cette troisième branche batterie (B'2).

2. Circuit électrique selon la revendication 1, **caractérisé en ce que** la batterie S2 est connectée au réseau de bord au moyen d'un deuxième commutateur (C2).

3. Circuit selon la revendication 1, **caractérisé en ce que** ledit moyen de stockage électrique (S1) apte à fournir une tension variable est monté sur une branche (B1) en série de la branche batterie (B12), la batterie étant de plus connectée au réseau de bord par une troisième branche B2', un commutateur C5 étant placé sur le réseau de bord entre la branche B1 et la troisième branche B2'.

4. Circuit selon l'une quelconque des revendications précédentes, **caractérisé en ce qu'**il comporte des moyens (C) pour déterminer la tension aux bornes du moyen de stockage électrique (S1) apte à fournir une tension variable.

5. Circuit selon l'une quelconque des revendications précédentes, **caractérisé en qu'**il comporte un limiteur de la tension fournie au réseau de bord.

6. Circuit électrique selon l'une quelconque des revendications précédentes, **caractérisé en ce que** le moyen de stockage électrique (S1) apte à fournir une tension variable comporte au moins un condensateur.

7. Circuit électrique selon la revendication 6, **caractérisé en ce que** le moyen de stockage électrique (S1) apte à fournir une tension variable comporte au moins un supercondensateur.

8. Circuit selon la revendication 6 ou la revendication 7, **caractérisé en ce que** le moyen de stockage (S1) apte à fournir une tension variable comporte une pluralité de condensateurs montés en série.

9. Circuit selon l'une quelconque des revendications précédentes, **caractérisé en ce que** le moyen de stockage (S1) apte à fournir une tension variable comporte une pluralité de condensateurs montés en parallèle.

10. Véhicule automobile comportant un circuit électrique selon l'une quelconque des revendications 1 à 9.
